## Europäisches Patentamt
## European Patent Office
## Office européen des brevets

(11) Veröffentlichungsnummer: **0 032 522**
**B1**

(12) **EUROPÄISCHE PATENTSCHRIFT**

(45) Veröffentlichungstag der Patentschrift:
30.05.84

(51) Int. Cl.³: **H 04 L 25/03, H 04 L 27/22, H 04 B 3/04**

(21) Anmeldenummer: **80104094.0**

(22) Anmeldetag: **15.07.80**

(54) **Adaptive Entzerrereinrichtung.**

(30) Priorität: **11.01.80 DE 3000856**

(43) Veröffentlichungstag der Anmeldung:
**29.07.81 Patentblatt 81/30**

(45) Bekanntmachung des Hinweises auf die Patenterteilung:
**30.05.84 Patentblatt 84/22**

(84) Benannte Vertragsstaaten:
**FR GB NL SE**

(56) Entgegenhaltungen:
**DE - A - 2 410 881**
**DE - A - 2 552 472**
**DE - B - 1 946 851**

**NACHRICHTENTECHNISCHE ZEITSCHRIFT, 23. Jahrgang, Heft 1, Januar 1970, Berlin K. MÖHRMANN "Aufwandgünstige Realisierung eines adaptiven Entzerrers für schnelle Datenübertragung" Seiten 36-42 Wissenschaftliche Berichte AEG-Telefunken 51(1978) 4/5, Seiten 231 bis 245**

(73) Patentinhaber: **ANT Nachrichtentechnik GmbH, Gerberstrasse 33, D-7150 Backnang (DE)**

(72) Erfinder: **Göckler, Heinz, Dipl.-Ing, Elbinger Strasse 52, D-7150 Backnang (DE)**

(74) Vertreter: **Schickle, Gerhard, Dipl.-Ing. et al, ANT Nachrichtentechnik GmbH Patent- und Lizenzabteilung Gerberstrasse 33, D-7150 Backnang (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Einrichtung zur Entzerrung von Mehr-Phasen- und/oder Mehr-Amplitudenmodulierten Datensignalen mit Entscheider und Entzerrer gemäss Oberbegriff des Patentanspruchs 1.

Eine solche Einrichtung ist beschrieben in dem Aufsatz «Datenübertrager mit 4,8 kBit/sec im Fernsprechnetz: Entwurf und Realisierung eines Modems nach den CCITT-Empfehlungen V. 27 bis /ter» von Göckler, Hofmeister und Till in Wissenschaftliche Berichte AEG-TELEFUNKEN 51 (1978) 4/5, Seite 231 bis 245 (vgl. insbes. Bild 3.2. auf Seite 239).

Nachteilig bei solchen adaptiven Entzerrungseinrichtung ist, dass aufgrund der begrenzten Wortlänge bereits bei nicht extremen Kanalverzerrungen Überläufe der Koeffizienten auftreten können.

Aufgabe der Erfindung ist es deshalb, eine adaptive Entzerrungseinrichtung der oben genannten Art anzugeben, bei der die Koeffizienten-Überläufe auch bei extremen Verzerrungen nicht oder nur in geringem Umfange auftreten.

Die Lösung erfolgt mit den in dem kennzeichnenden Teil des Patentanspruchs 1 angegebenen Mitteln.

Durch die erfindungsgemässe Entzerrungseinrichtung ist es möglich, die Koeffizienten zur adaptiven Einstellung der Entzerrerfilter so zu skalieren, dass auch bei den ungünstigsten zu erwartenden Verzerrungen der Übertragungsstrecke keine oder möglichst wenige Koeffizienten-Überläufe auftreten. Ferner ist es mittels Skalierung möglich, Koeffizientenwerte, die sich nahe des Nullbereiches eingestellt haben, in einen höheren Wertbereich zu überführen, der erstens eine feinere Entzerrung liefert und zweitens einer geringeren Beeinflussung der entzerrerintern erzeugten Rauschsignale unterliegt. Durch die Ansprüche 4 und 5 wird eine erfindungsgemässe Entzerrereinrichtung angegeben, die eine automatische Skalierung der Koeffizienten unter Vorgabe eines optimalen Wertbereichs vorzunehmen gestattet.

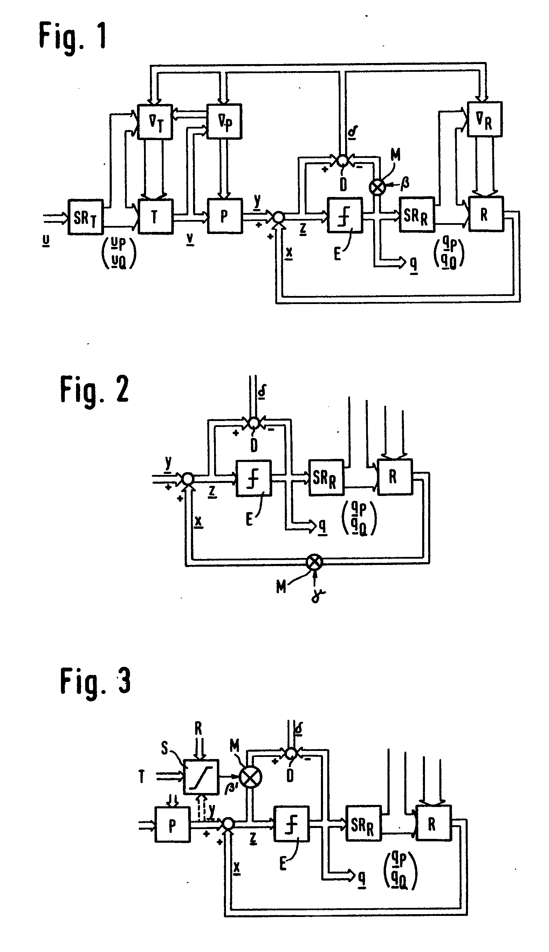

Es folgt nun die Beschreibung der Erfindung anhand der Figuren 1 bis 3, die Ausführungsbeispiele darstellen.

Die Fig. 1 zeigt eine adaptive Entzerrungsseinrichtung mit digitaler Signalverarbeitung, wobei das Prinzip der Entscheidungsrückkopplung verwendet wird. Als Modulationsverfahren ist achtstufige Phasenmodulation mit Differenzcodierung (8-DPSK) eingesetzt. Die Eingangssignaldatenpaare $\underline{u}$ gelangen über die mit Hilfe des Zustandsvariablenspeichers $SR_T$ und der Matrix T realisierte lineare Filterkonfiguration (Transversalfilter) zunächst zur Phasenregeleinrichtung P. Deren Ausgangssignal $\underline{y}$ wird zu der vom entscheidungsrückgekoppelten Entzerrerteil (repräsentiert durch $SR_R$ und R, Rekursivfilter) gelieferten Grösse $\underline{x}$ addiert und das resultierende entzerrte Datensignal $\underline{z}$ auf den Entscheider E gegeben. Bei genügend kleiner Restverzerrung von $\underline{z}$ ist die Entscheiderausgangsfolge $\underline{q}$ identisch mit der um die Schritttaktzeit verzögerten gesendeten Datenfolge. Die Fehlergrösse $\underline{\delta}$ wird in dem Differenzglied D erzeugt und zur adaptiven Einstellung der Entzerrerparameter verwendet.

Erfindungsgemäss ist nun in dem Zweig vor dem rechten Eingang des Differenzgliedes D ein Multiplizierer M eingefügt, durch den eine Multiplikation des Signalwertes dieses Zweiges mit einer positiven skalaren Grösse $\beta$ erfolgt. Dadurch werden alle koeffizienten sowohl des transversalen Entzerrerteils T als auch des entscheidungsrückgekoppelten Entzerrerteils R gleichermassen mit dem Faktor $\beta$ bewertet. Der Koeffizientenwertebereich ist damit proportional zu $\beta$, durch Wahl von $\beta <$ wird er verkleinert, wodurch innerhalb der Aussteuergrenzen (Überlaufgrenzen) stärkere Verzerrungen korrekt entzerrt werden können.

Die Fig. 2 zeigt einen Ausschnitt der Entscheidungsrückkopplungsschleife nach Fig. 1, wobei jedoch hier der Multiplizierer M in dieser Entscheidungsrückkopplungsschleife eingefügt ist und eine Multiplikation mit der skalaren Grösse $\gamma$ durchgeführt wird. Durch diese Anordnung werden nur die Koeffizienten des Rekursiventzerrers R bewertet, und zwar mit $1/\gamma$. Die Koeffizienten des Transversalentzerrers bleiben unverändert.

Die Fig. 3 zeigt ebenfalls einen Ausschnitt aus Fig. 1, wobei hier jedoch der Multiplizierer M, durch den eine Multiplikation des Signalwertes mit der skalaren Grösse $\beta'$ erfolgt, in dem Zweig vor dem linken Eingang des Differenzgliedes D eingefügt ist. Hierdurch erfolgt eine Bewertung aller Koeffizienten mit $1/\beta'$. Der Skalarwert $\beta'$ wird durch das Schwellwertglied S beeinflusst, wobei die Beeinflussung beispielsweise in Abhängigkeit der aktuellen Koeffizientenwerte von Transversal- und/oder Rekursiventzerrer bzw. in Abhängigkeit (gestrichelt) der transversal- und phasenentzerrten Signalfolge $\underline{y}$ derart erfolgt, dass $\beta'$ bei Überschreitung eines oberen Schwellwertes vergrössert und bei Unterschreitung eines unteren Schwellwertes verkleinert wird. Auf diese Weise lässt sich eine automatische Skalierung der Entzerrerkoeffizienten erreichen, die bei geeigneter Bemessung des oberen Schwellwertes keinen Koeffizienten-Überlauf und bei richtiger Bemessung der unteren Schwelle keine störende Beeinflussung durch den internen Rauschpegel und eine sehr feine, schnell adaptierende fehlerarme Entzerrung ermöglicht.

Vorteilhafterweise enthält das Schwellwertglied S ein Integrationsglied, durch das einzelne Signal- oder Koeffizienten-Überschreitungen über den vorgebenen Schwellwert für eine gewisse einstellbare Zeit aufsummiert und gemittelt werden können.

Selbstverständlich ist die Erfindung nicht auf adaptive Entzerrer mit quantisierter Rückkopplung beschränkt, sondern gilt auch für reine Transversalentzerrer. Ausserdem kann die erfindungsgemässe Entzerrungseinrichtung nicht nur bei digitaler, sondern auch bei analoger Signalverarbeitung eingesetzt werden.

## Patentansprüche

1. Einrichtung zur adaptiven Entzerrung von Mehr-Phasen- und/oder Mehr-Amplituden-modulierten Datensignalen mit Entscheider (E) und Entzerrer (T, R), wobei in dem Signalzweig ($\underline{x}$, $\underline{z}$, $\underline{q}$)

des Entzerrers die Datensignale entzerrt und in den Regelzweig von einem Differenzglied (D) die Differenz zwischen demoduliertem Entscheiderausgangs- (q) und -eingangssignal (z) dem Entzerrer als Regelgrösse (δ) zur adaptiven Einstellung der Entzerrerkoeffizienten zugeführt werden, dadurch gekennzeichnet, dass in dem Signalzweig (x, z, q) ein Multiplizierer (M) eingefügt ist, durch den eine Multiplikation des Signalwerts des Zweiges mit einer positiven skalaren Grösse (β, β', γ) derart erfolgt, dass die Skalierung der Entzerrerkoeffizienten ermöglicht wird.

2. Einrichtung nach Anspruch 1, dadurch gekennzeichnet, dass die Einfügung des Multiplizierers (M) in dem Signalzweig (z, q) vor einem der beiden Eingänge des Differenzgliedes (D) erfolgt (Fig. 1, 3).

3. Einrichtung nach Anspruch 1, wobei der Entzerrer einen Transversal-(T) und einen Rekursiv-(R)-Teil aufweist, dadurch gekennzeichnet, dass die Einfügung des Multiplizierers (M) im Entscheidungsrückkopplungszweig (x, q) des Rekursiventzerrerteils (R) erfolgt (Fig. 2).

4. Einrichtung nach einem der vorhergehenden Ansprüche, dadurch gekennzeichnet, dass die Bemessung der skalaren Grösse (β') automatisch so erfolgt, dass die Entzerrerkoeffizienten bzw. Signale Werte in einem vorgebbaren Bereich annehmen (Fig. 3).

5. Einrichtung nach Anspruch 4, gekennzeichnet durch ein Schwellwertglied (S), das bei Unter- bzw. Überschreitung eines Bereiches innerhalb des vorgebbaren Bereichs durch die Entzerrerkoeffizienten- oder Signalwerte die skalare Grösse (β') beeinflusst (Fig. 3).

**Claims**

1. Equipment for the adaptive distortion correction of multiphase-modulated and/or multi-amplitude-modulated data signals with decider (E) and distortion corrector (T, R), wherein the data signals are corrected for distortion in the signal branch (x, z, q) of the distortion corrector and the difference between the demodulated output signal (q) and input signal (z) is fed from a difference member (D) into the regulating branch to the distortion corrector as regulating magnitude (δ) for the adaptive setting of the distortion correction co-efficient, characterised thereby, that inserted into the signal branch (x, z, q) is a multiplier (M), through which a multiplication of the signal value of the branch takes place by a positive scalar magnitude (β, β', γ) in such a manner that the scaling of the distortion correction co-efficients is made possible.

2. Equipment according to claim 1, characterised thereby, that the insertion of the multiplier (M) into the signal branch (z, q) takes place in front of one of both the inputs of the difference member (D) (Figs. 1 and 3).

3. Equipment according to claim 1, wherein the distortion corrector displays a transversal part (T) and a recursive part (R), characterised thereby, that the insertion of the multiplier (M) takes place in the decision feedback branch (x, q) of the recursive distortion corrector part (R) (Fig. 2).

4. Equipment according to one of the preceding claims, characterised thereby, that the dimensioning of the scalar magnitude (β') so takes place automatically that the distortion correction co-efficients or signals assume values in a predeterminable range (Fig. 3).

5. Equipment according to claim 4, characterised by a threshold value member (5), which influence the scalar magnitude (β') on a range within the predeterminable range being fallen below or exceeded by the values of the distortion correction co-efficients or signals (Fig. 3).

**Revendications**

1. Dispositif pour la correction de distorsion adaptative de signaux de données, modulés en phase plurivalente et/ou en amplitude plurivalente, comprenant un dispositif de décision ou discriminateur (E) et un correcteur de distorsion (T, R), où les signaux de données sont corrigés dans le circuit du signal (x. z, q) du correcteur de distorsion et un élément différenciateur (D) applique au correcteur, dans le circuit de réglage, la différence entre le signal de sortie démodulé (q) et le signal d'entrée (z) du discriminateur comme grandeur réglante (δ) pour l'ajustement adaptatif des coefficients du correcteur, caractérisé en ce qu'un multiplicateur (M) inséré dans le circuit du signal (x, z, q) multiplie la valeur de signal de ce circuit par une grandeur scalaire positive (β, β', γ), de telle manière qu'il devient possible de cadrer les coefficients du correcteur de distorsion.

2. Dispositif selon la revendications 1, caractérisé en ce que le multiplicateur (M) est inséré dans le circuit du signal (z, q) devant l'une des deux entrées de l'élément différenciateur (D) (figure 1, 3).

3. Dispositif selon la revendication 1, dont le correcteur de distorsion présente une partie transversale (t) et une partie récursive (R), caractérisé en ce que le multiplicateur (M) est inséré dans la branche de réaction de discrimination (x, q) de la partie récursive (R) du correcteur (figure 2).

4. Dispositif selon une des revendications précédentes, caractérisé en ce que le dimensionnement de la grandeur scalaire (β') s'effectue automatiquement de manière que les coefficients ou les signaux du correcteur de distorsion prennent des valeurs dans une plage pouvant être préfixée (figure 3).

5. Dispositif selon la revendication 4, caractérisé par un élément de seuil (S) qui fait varier la grandeur scalaire (β') au cas où les valeurs des coefficients ou des signaux du correcteur de distorsion descendent au-dessous ou s'élèvent au-dessus d'une gamme à l'intérieur de la plage préfixée (figure 3).

## Fig. 1

## Fig. 2

## Fig. 3